# EUROPÄISCHE PATENTANMELDUNG

(11) **EP 1 770 488 A1**
(43) Veröffentlichungstag der Anmeldung: **04.04.2007**
(21) Anmeldenummer: 05020956.8
(22) Anmeldetag: 26.09.2005
(51) Int. Cl.: G06F 3/048

(54) **Verfahren und System zur Unterstützung eines Funktionsaufrufs mittels einer Benutzeroberfläche**

(71) Anmelder: SIEMENS AKTIENGESELLSCHAFT, 80333 München (DE)
(72) Erfinder: Bluhm, Anja, 90537 Feucht (DE); Rettner, Julian, 90489 Nürnberg (DE); Weinländer, Markus, 91230 Happurg (DE); Windl, Helmut, 93077 Bad Abbach (DE)

(57) **Zusammenfassung**

Erfindungsgemäß wird ein Verfahren zur Unterstützung des Funktionsaufrufs in einem Betriebsystem angegeben. Dabei wird ein von dem Benutzer veranlasster Funktionsaufruf zunächst durch das System festgestellt und überprüft, ob ein Objekt für die Anwendung der Funktion ausgewählt ist. Zudem wird eine Information dem Benutzer zugänglich gemacht, falls kein Objekt ausgewählt ist; falls ein Objekt ausgewählt ist, wird es überprüft, ob es für die Anwendung der Funktion geeignet ist; und falls ein nicht für die Anwendung der Funktion geeignetes Objekt ausgewählt ist, wird eine Information darüber dem Benutzer zugänglich gemacht. Durch die Erfindung wird eine einfachere Verwendung der Benutzeroberfläche vor allem für Anfänger bzw. Umsteiger und eine dadurch geringere Einstiegshürde bzw. einfachere Einarbeitung ermöglicht.

## Beschreibung

Die Erfindung betrifft ein Verfahren und eine System zur Unterstützung eines Aufrufs einer Funktion mittels einer Benutzeroberfläche, über die ein Benutzer mit einem Daten verarbeitenden elektronischen Systems kommuniziert.

Eine Benutzeroberfläche stellt in der Regel eine Mensch-Maschine Schnittstelle dar, mittels welcher ein Benutzer (Mensch) mit einem Betriebsystem/einem Computer (Maschine) über die Benutzeroberfläche interagieren kann. Man unterscheidet zwei Arten von Benutzeroberflächen, zum einen die funktionsorientierten Benutzeroberflächen und zum anderen die objektorientierten (od. grafischorientierten) Benutzeroberflächen. Bei funktionsorientierten Benutzeroberflächen ist es zwingend notwendig, dass der Benutzer die einzelnen Befehle/Funktionen eingibt und bestätigt. Dahingegen wird bei objektorientierten Benutzeroberflächen nicht zwingend vorausgesetzt, dass die Befehle eingegeben werden, sondern es können über Objektmanipulationen entsprechende Befehle ausgeführt werden. Ein typisches Beispiel dafür ist das Betriebssystem Windows.

In einem Entwicklungssystem wird in aller Regel ein objektorientierter Ansatz verfolgt, da für sehr viele Funktionen zunächst eine Auswahl der betroffenen Objekte technisch erforderlich ist. So muss der Benutzer beispielsweise für eine Funktion zunächst festlegen, für welche Objekte bzw. wie die Funktion ausgeführt werden soll.

Manchen Benutzern - vor allem Anfängern - ist das Prinzip der objektorientierten Interaktion nicht für alle Funktionen bekannt. Die Tests der Bedienbarkeit haben gezeigt, dass Funktionen wie beispielsweise "Öffnen" oder "Kopieren" über die objektorientierte Interaktion gefunden werden, andere Funktionen wie "Download" oder "Compile" aber eher funktionsorientiert erwartet werden.

Bei einem rein objektorientierten Ansatz stehen bestimmte Funktionen im Menü/Kontextmenü oder auf der Symbolleiste (Toolbar) nur zur Verfügung, wenn entsprechende Objekte ausgewählt wurden. Andernfalls wird die Funktion nicht angeboten oder "disabled" - in der Regel grau dargestellt - bezeichnet. Wenn der Benutzer nicht weiß, ob oder warum die Selektion eines Objekts für diese Funktion nicht geeignet ist, hat er auch keine Möglichkeit, eine Hilfestellung zu erhalten. Eine derartige Benutzeroberfläche ist wenig komfortabel und kann eine lange Einarbeitungszeit notwendig machen, weil ein anderer Befehl oder ein geeignetes Objekt nachgeschlagen werden muss.

Der Erfindung liegt die Aufgabe zugrunde, den Aufruf einer Funktion eines Daten verarbeitenden elektronischen Systems, insbesondere eines Computers, zu unterstützen.

Diese Aufgabe wird erfindungsgemäß durch ein Verfahren mit den Merkmalen des Anspruchs 1 und ein System mit den Merkmalen des Anspruchs 6 gelöst. Zur Unterstützung des Funktionsaufrufs wird dabei durch das System überprüft, ob ein Objekt für die Anwendung der Funktion ausgewählt wurde. Zudem wird eine Information darüber dem Benutzer zugänglich gemacht.

Die mit der Erfindung erzielten Vorteile bestehen insbesondere darin, dass eine einfachere Bedienung/Verwendung vor allem für Anfänger bzw. Umsteiger und dadurch geringere Einstiegshürden bzw. eine einfachere Einarbeitung ermöglicht wird. Dieses Verfahren ist leicht und intuitiv zu erlernen und orientiert sich an den Gegebenheiten bei einem Funktionsaufruf.

Bei einer Benutzeroberfläche handelt es sich um eine Schnittstelle bzw. Benutzerschnittestelle, über die ein Benutzer/Verwender mit einem Daten verarbeitenden elektrischen System, z.B. einem Computer, kommunizieren kann. Erfindungsgemäß wird ein Verfahren zur Unterstützung des Funktionsaufrufs in einem derartigen System angegeben. Dabei wird ein vom Benutzer veranlasster Funktionsaufruf durch das System festgestellt und dann überprüft, ob bereits ein Objekt für die Anwendung der Funktion ausgewählt ist. Zudem wird dem Benutzer eine Information zugänglich gemacht, falls kein Objekt ausgewählt ist. Falls ein Objekt ausgewählt ist, wird überprüft, ob es für die Anwendung der Funktion geeignet ist, und falls ein für die Anwendung der Funktion ungeeignetes Objekt ausgewählt ist, wird dem Benutzer die entsprechende Information zugänglich gemacht. Ist ein für die Anwendung der Funktion geeignetes Objekt ausgewählt, kann die Funktion ausgeführt werden.

Wie bei gewöhnlichen objektorientierten Benutzeroberflächen kann die Funktion ohne weitere Eingabe vom Benutzer ausgeführt werden, wenn der Benutzer vor dem Aufruf der Funktion ein für die Anwendung der Funktion geeignetes Objekt gewählt hat. Sind nur für die Anwendung der Funktion geeignete Objekte ausgewählt, kann die Funktion unmittelbar ausgeführt werden.

Falls der Benutzer vor dem Funktionsaufruf mehrere Objekte ausgewählt hat, und von denen aktuell nicht alle für diese Funktion geeignet sind, dann ist es vorteilhaft, entweder dem Benutzer eine Rückmeldung zu geben, welche von den gewählten Objekten für diese Funktion aktuell geeignet sind, oder die Funktion mit diesen Objekten direkt auszuführen. Anschließend kann dem Benutzer erklärt werden, warum die übrigen, von ihm ausgewählten Objekte nicht geeignet sind und wie er gegebenenfalls zur Verwendung der Funktion mit diesen übrigen Objekten ermöglichen kann.

Ist kein für die Anwendung der Funktion aktuell geeignetes Objekt vorhanden, kann eine Information darüber auch ausgegeben werden.

Außer dem oben geschilderten Verfahren umfasst die Erfindung auch eine Vorrichtung bzw. ein System, mit der das Verfahren ausgeführt werden kann.

Bei dem System werden keine weiteren Hardware-Komponenten benötigt, sie kann allein durch Software realisiert werden.

Die Unteransprüche enthalten weitere vorteilhafte Ausführungsformen.

Die Erfindung wird im Folgenden im Rahmen eines Ausführungsbeispiels anhand von Figuren näher dargestellt.

Es zeigen:
- Fig.1:: ein Beispiel einer objektorientierten Benutzeroberfläche
- Fig.2:: ein Beispiel einer bei einer erfindungsgemäßen Funktionsaufrufsunterstützung verwendeten Benutzeroberfläche

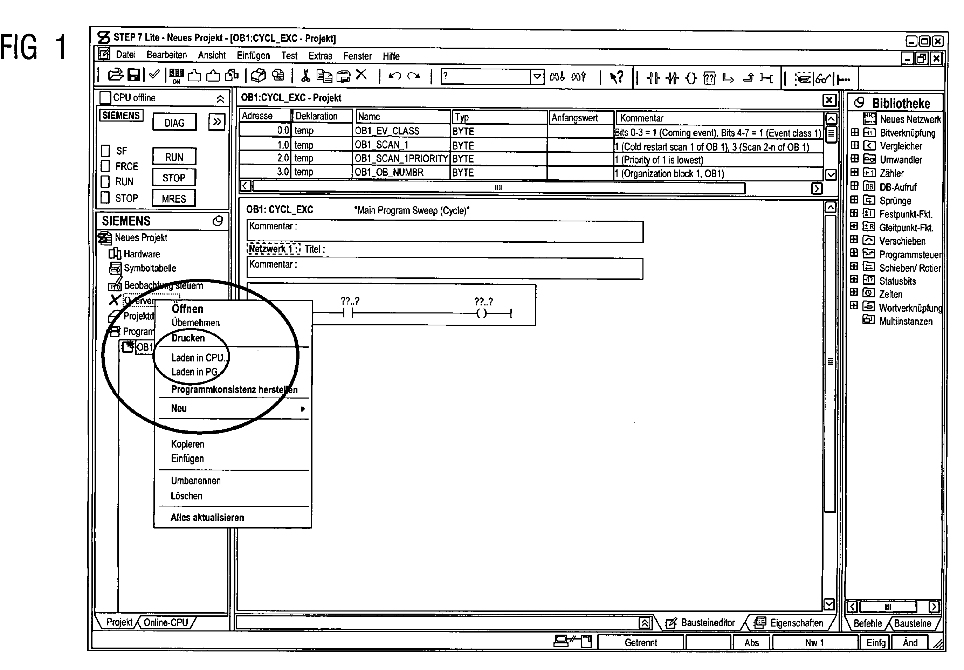

Fig.1 zeigt einen Funktionsaufruf, "Laden in CPU", bei einer objektorientierten Benutzeroberfläche. Falls der Benutzer kein ladbares Objekt selektiert hat, ist die Funktion nicht aufrufbar oder gesperrt und wird z.B. - wie in Fig. 1 in dem durch den Kreis markierten Bereich gezeigt - durch die Darstellung (z.B. in Grau im Gegensatz zur schwarzen Darstellung ausführbarer Funktionen) als nicht ausführbar gekennzeichnet. Hier gibt es keine Möglichkeit für den Benutzer, eine Hilfestellung zu bekommen, z.B. ob oder warum die Selektion des Objekts für diese Funktion nicht geeignet ist.

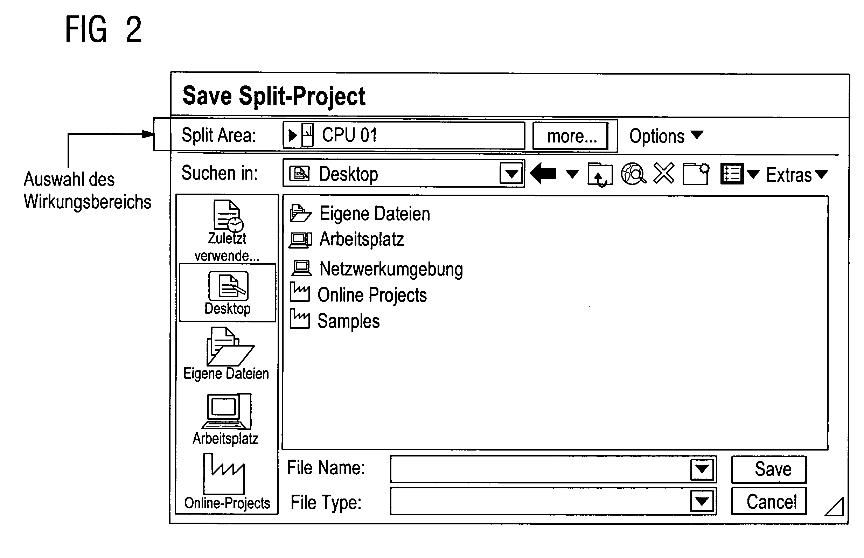

Ein Beispiel für ein erfindungsgemäßes Verfahren wird im Folgenden angegeben, wobei die Funktion, "Speicher unter", aufgerufen wird. Wenn der Benutzer ein zu dieser Funktion passendes Objekt gewählt und dann die Funktion aufgerufen hat, wird diese Funktion sofort bzw. unmittelbar, d.h. ohne weitere Bedienschritte vom Benutzer, ausgeführt. Das ist genau wie bei dem objektorientierten Ansatz. Wird kein oder ein nicht geeignetes Objekt selektiert, erscheint, wie in der Fig.2 gezeigt, ein Dialogfenster bzw. eine zusätzliche Schaltfläche, die eine geeignete Auswahl des Wirkungsbereichs, z.B. Wirkungsbereich CPU 01 in Fig. 2, anbietet. Hat der Benutzer mehrere Objekte ausgewählt, von denen einige nicht für diese Funktion geeignet sind, so sind im oben genannte Dialogfenster diejenigen der selektierten Objekte vorausgewählt (markiert), die die Funktion unterstützen. So ist es möglich, die geeigneten Objekte in dem Wirkungsbereich CPU 01 zu speichern (d.h. die Funktion auszuführen), indem man einfach einen entsprechenden Befehl eingibt.

## Patentansprüche

1. Verfahren zur Unterstützung des Aufrufs einer Funktion eines Daten verarbeitenden elektronischen Systems, bei dem
- ein von einem Benutzer veranlasster Funktionsaufruf durch das System festgestellt wird,
- durch das System überprüft wird, ob ein Objekt für die Anwendung der Funktion ausgewählt ist,
- falls kein Objekt ausgewählt ist, eine Information darüber dem Benutzer zugänglich gemacht wird,
- falls ein Objekt ausgewählt ist, überprüft wird, ob es für die Anwendung der Funktion geeignet ist, und
- falls ein nicht für die Anwendung der Funktion geeignetes Objekt ausgewählt ist, eine Information darüber dem Benutzer zugänglich gemacht wird.

2. Verfahren nach Anspruch 1,
**dadurch gekennzeichnet, dass**
- die Funktion unmittelbar ausgeführt wird, wenn nur für die Anwendung der Funktion geeignete Objekte ausgewählt sind.

3. Verfahren nach einem der Ansprüche 1 oder 2,
**dadurch gekennzeichnet, dass**
- eine entsprechende Information ausgegeben wird, wenn aktuell kein für die Anwendung der Funktion geeignetes Objekt vorhanden ist.

4. Verfahren nach einem der vorhergehenden Ansprüche,
**dadurch gekennzeichnet, dass**
- falls kein Objekt ausgewählt ist oder ein nicht für die Anwendung der Funktion geeignetes Objekt ausgewählt ist, eine Information über für die Anwendung der Funktion geeignete Objekte dem Benutzer zugänglich gemacht wird.

5. Verfahren nach Anspruch 4,
**dadurch gekennzeichnet, dass**
- falls mehrere Objekte ausgewählt sind, die teilweise nicht für die Anwendung der Funktion geeignet sind, die Information über für die Anwendung der Funktion geeignete Objekte diejenigen der ausgewählten Objekte angibt, die für die Anwendung der Funktion geeignet sind.

6. System, welches zur Unterstützung des Aufrufs einer Funktion ausgebildet (ausgestaltet, angepasst, eingerichtet) ist, mit einem folgende Funktionen ausführenden Computerprogramm:
- Feststellung eines von einem Benutzer veranlassten Funktionsaufrufs,
- Überprüfung, ob ein Objekt für die Anwendung der Funktion ausgewählt ist,
- Bereitstellung einer Information über die fehlende Auswahl eines Objekts,
- ausgebildet, falls ein Objekt ausgewählt ist, Überprüfung, ob ein ausgewähltes Objekt für die Anwendung der Funktion geeignet ist, und
- Bereitstellung einer Information über die Auswahl eines nicht für die Anwendung der Funktion geeigneten Objektes.

7. System nach Anspruch 6,
**dadurch gekennzeichnet, dass**
- das System zur unmittelbaren Durchführung der Funktion bei Auswahl eines für die Anwendung der Funktion geeigneten Objektes ausgebildet ist.

8. System nach Anspruch 6 oder 7,
**dadurch gekennzeichnet, dass**
- das System eine Anzeige, eine Bedienoberfläche, Rechenmittel und Eingebemitteln umfasst.
